(19) Europäisches Patentamt
European Patent Office
Office européen des brevets

(11) **EP 1 977 039 B1**

(12) **EUROPEAN PATENT SPECIFICATION**

(45) Date of publication and mention
of the grant of the patent:
**25.06.2014 Bulletin 2014/26**

(21) Application number: **07709431.6**

(22) Date of filing: **24.01.2007**

(51) Int Cl.:
*D21H 17/28* (2006.01)      *D21H 17/29* (2006.01)
*D21H 21/16* (2006.01)      *C08L 3/00* (2006.01)

(86) International application number:
**PCT/SE2007/050038**

(87) International publication number:
**WO 2007/086803 (02.08.2007 Gazette 2007/31)**

(54) **SIZING COMPOSITION, METHOD FOR THE PRODUCTION OF SIZED PAPER OR PAPERBOARD AND SIZED PAPER OR PAPERBOARD**

GRÖSSENEINSTELLUNGSVORRICHTUNG, VERFAHREN ZUR HERSTELLUNG VON PAPIER ODER PAPPE MIT EINGESTELLTER GRÖSSE UND PAPIER ODER PAPPE MIT EINGESTELLTER GRÖSSE

FORMULE DE COLLE, MÉTHODE DE PRODUCTION DE PAPIER OU DE CARTON COLLÉ ET PAPIER OU CARTON COLLÉ

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.01.2006 US 761952 P**

(43) Date of publication of application:
**08.10.2008 Bulletin 2008/41**

(73) Proprietor: **Stora Enso AB
791 80 Falun (SE)**

(72) Inventor: **HÅKANSSON, Philip
S-294 37 Sölvesborg (SE)**

(56) References cited:
**EP-A2- 0 824 161          WO-A1-2004/029097
SE-C2- 520 881          US-A- 4 964 915
US-A1- 2005 277 768          US-B1- 6 585 859**

• **KWEON M.R. ET AL.: 'Cationization of Waxy and Normal Corn and Barley Starches by an Aqueous Alcohol Process' STARCH/STORKE vol. 49, no. 2, 1997, pages 59 - 66, XP003011307**

**Description**

TECHNICAL FIELD

The invention relates to a new composition, which is applicable as a so-called sizing composition in connection with the production of paper, paperboard and similar products. The invention also relates to a method for the production of sized paper or sized paperboard wherein a sizing composition according to the invention has been used. Finally, the invention relates to sized paper or sized paperboard produced according to the method.

More specifically, the invention relates to a composition in the form of a water-based emulsion or dispersion comprising at least some hydrophobic, cellulose-reactive sizing agent and a cationic or amphoteric starch of amylopectin obtained from barley.

BACKGROUND OF THE INVENTION

Water-based emulsions or dispersions of hydrophobic sizing agents are used in order to decrease the rate of liquid penetration into the structure of a paper or paperboard. Examples of paper- and paperboard qualities of this kind are photocopying paper, writing and printing paper, paper for so called ink-jet printers and paperboard for juice, milk and other liquid packages. These grades thus need, for their application, to have certain liquid-repellant properties. This effect can be achieved in various ways. The most common way is to add an emulsion or dispersion of a hydrophobic material and a cationic starch during the paper production process. Many different hydrophobic materials can be used. Among the most efficient and most used are the so-called hydrophobic, cellulose-reactive sizing agents. When using this type of agent, it is believed that the hydrophobic effect is obtained by means of a reaction between the hydrophobic material and the hydroxyl groups in the cellulose.

The most commonly used hydrophobic, cellulose-reactive agents in neutral or weakly alkaline conditions during paper or paperboard manufacture, are alkylketene dimer (termed AKD below) or alkenyl succinic anhydride (termed ASA below). The above named hydrophobic agents are thus cellulose-reactive and bind directly to the carboxyl groups in the cellulose.

In order for the abovementioned hydrophobic agents to be attracted, often termed retained, to the anionic cellulose fiber material, a polymer is added in the emulsifying or dispersion process. This polymer, which in most cases consists of starch, does also have a stabilizing effect on the emulsion or dispersion.

The main components of starch, amylose and amylopectin are both made of glucose molecules that are linked in long chains. Grain normally consists of 20-25% of amylose. However, problems arise when the polymer, that is used in the emulsifying or dispersion process, and that often consists of starch, has a high content of amylose. This is the case when starch is extracted from potato, maize and other commonly used grains. Starch of amylose consists of chain molecules with poor stability. This kind of starch can only be stored as a liquid for a couple of hours before it precipitates (so-called retrogradation). It also does not give an acceptable retention of the cellulose fiber material. It is known that starch of amylopectin has better properties. It consists of branched molecules, tolerates longer storing and gives better retention of the cellulose fiber material.

Amylopectin is naturally present in so-called "waxy maize" starch. It is extracted from a special kind of maize that is very hard to raise and thus very expensive and difficult to get hold of.

The starches occurring most commonly in size compositions are normally of a cationic character. However, anionic and amphoteric starches also occur.

The starch is thus substituted by chemical modification with cationic and/or anionic groups. Ammonium compounds, preferably quaternary, but can also be primary or tertiary, are often used when producing cationic starches. This kind of cationization of starch is well known and is described for example in US 4,088,600, US 2,876,217 and 4,840,705. The starch can also be cross-linked as described in SE 513 602.

Emulsions and dispersions in which the hydrophobic material consists of ASA are produced according to a so-called in-situ process, i.e. in close proximity to the composition's application, i.e. in practice adjacent to the machine or machines which manufacture the paper or paperboard. This is due to the fact that ASA has a tendency to hydrolyze, i.e. it reacts with the water present in the emulsion or dispersion.

However, AKD emulsions or dispersions are more stable and can be stored for a long time without loosing the sizing effect. Despite this fact, it can also be advantageous to produce this emulsions or dispersions according to the so-called in-situ process.

Emulsions or dispersions can also consist of a mixture of AKD and ASA as described in the Swedish patent application SE-A-9601225-7. These emulsions or dispersions are preferable also manufactured according the so-called in-situ process.

Known sizing compositions exhibit problems such as slowly developed hydrophobicity, poor adhesion of toner, deposition of hydrolysis products when photocopying and reduced effectiveness during paper manufacturing due to interruptions as a result of poor hydrophobicity and the occurrence of hydrolysis products. Another problem is poor resistance against hydrogen peroxide in connection with the filling of liquids in packages of liquid packaging board.

In order to eliminate or to reduce the abovementioned problems it has been successful to have a starch with high cationic charge, i.e. the grade of substitution is high. When using high substituted starches, i.e. starches with high cationic activity, problems with stability for the emulsion/sizing composition can also occur. In particular with high dry contents, i.e. dry contents above 10-15%, problem with stability often occurs. This is also temperature-dependent, thus in countries with warmer climate the dry content must often be even lower in order to achieve stability. It is also important that the particle size distribution, of the particles in the emulsions or dispersions, is as narrow as possible since there is an optimal size for the particles in order to avoid the problems above and in order to achieve as high hydrophobicity as possible.

It has been shown that small particles give rise to an even distribution on the surface of the cellulose and that the sizing agent, after the particles have been distributed on the surface, is better spread along the surface when the particle is small, but there are also some disadvantages that arise when the particles are too small.

Among these disadvantages it is above all bad retention of the sizing agent and increased hydrolysis of the alkyl dimer and/or alkenyl succinic anhydride.

In order to overcome these disadvantages the particles must have a certain smallest size, but if the particle size increases too much, the sizing effect will decrease since the distribution of the particles will be too low and the spreading will be made more difficult.

ACCOUNT OF THE INVENTION

The purpose of the invention is to offer a sizing composition wherein the above-mentioned problems are eliminated or restricted. This can be achieved in that the starch used in production of the emulsion or dispersion principally comprises anionic, cationic or amphoteric starch of amylopectin, or derivates therefrom, obtained from barley with high amylopectin content. This naturally genotype of barley is called "high amylopectin barley" or "waxy barley" and has an amylopectin content above 90%.

The starch of high amylopectin barley should be substituted with cationic groups, for example by chemical modification. For this purpose, ammonium compounds, which preferably are quaternary, but can also be primary or tertiary, are often used.

According to one aspect of the invention, the starch of high amylopectin starch contains more than 95% amylopectin, preferably at least 98% amylopectin.

The chemical composition of the stock system used in the manufacture of paper or paperboard is definitive for the degree of substitution of the high amylopectin barley-starch required for the optimum result. The degree of substitution is thus suitable between 0,01 and 0,3, preferably between 0,02 and 0,2.

It has surprisingly been found that effects are obtained by means of the above-mentioned composition which considerably reduce or eliminate many of the shortcomings which can be associated with prior art. Extraction of amylopectin from barley is a cheaper process since the supply of barley is larger compared to for example maize. It has also been found that emulsions from barley have a more uniform particle size.

One main purpose of the invention is thus to provide a new and improved sizing composition, which can be used for sizing of paper, paperboard and similar products.

Another purpose of the invention is to provide a new sizing composition, which is more stable, especially at higher dry contents, compared to previous sizing compositions.

Yet another purpose of the invention is to provide a new sizing composition, which is more efficient compared to previously known compositions and thus be able to reduce the amount of sizing agent necessary to achieve a hydrophobic grade similar or corresponding to the one of previously known sizing compositions.

Another purpose of the invention is to provide a new sizing composition, which sizing effect or sizing ability develop more rapidly compared to previously known compositions.

A further purpose is to provide a new sizing composition, which polymer mainly contains anionic, cationic or amphoteric high amylopectin barley-starch, wherein the retention properties of the sizing composition is improved compared to conventionally used starches, at the same time as the starch present improved stability and the cost for said sizing composition is reduced.

Another purpose is to provide a new sizing composition for which negative effects on the hydrophobization effect are considerably reduced or eliminated in connection with the use of precipitated calcium carbonate.

Yet another purpose is to provide a new sizing composition in which the amount of undesirable hydrolysis products obtained in paper or paperboard manufacturing process is considerably reduced or eliminated, compared to conventional sizing compositions.

Another purpose is to provide an improved method for producing sized paper or paperboard using the new composition according to the invention.

Another purpose of the invention is to provide sized paper or sized paperboard with improved properties using the new composition.

According to the invention, these and other purposes are achieved by providing a sizing composition in the form of a water based dispersion or emulsion, the starch which is used in the production of the dispersion or emulsion consists of anionic cationic or amphoteric starch, preferably starch of amylopectin or derivates therefrom, extracted from barley, so-called high amylopectin barely. The hydrophobic constituent of the emulsion or dispersion consists of AKD or ASA or a mixture of these two cellulose-reactive compounds.

Example 1

Two different AKD-dispersions are produced in the following way:

50 parts of a wax consisting of alkylketen dimer are melted. This melt are added, while stirring continuously, to a hot solution consisting of 2 parts dispersant, 2500 parts water and 100 parts of cationic starch. The cationic starch in the two different dispersions consists of:

    1a. waxy maize starch

    1b. high amylopectin barley-starch

Both starches are substituted with cationic quaternary ammonium groups to a substitution level of 0,050%.

Sheets of paper are produced in the laboratory from a standard stock according to the standard method SCAN-C23X.

In two different series are dispersions produced according to 1a and 1b used.

On sheets of paper produced using dispersion 1b, i.e. using a dispersion according to the invention, considerably higher hydrophobicity is obtained, measured according to the so-called Cobb method (ISO 535:1991(E)), than on sheets of paper which is sized with dispersions produced according to 1a.

Example 2

The particle size distribution is measured using laser diffraction technique by means of a Malvern Mastersizer 20. The dispersion produced according to the invention, i.e. 1b, receive a substantially narrower particle size distribution compared to the dispersion wherein the starch consists of waxy maize (1a).

Example 3

The two different dispersions 1a and 1b were stored at a temperature of 35° C during two months. The dispersion containing waxy maize starch is, after the storage time, agglomerated and sheets produced according to the above-mentioned method present high Cobb-values, i.e. low hydrophobicity. The dispersion produced according to the invention shows no tendency to agglomeration, after these two months, and present low Cobb-values, i.e. high hydrophobicity.

Example 4

In two different series paperboard with a grammage of 350 g/m$^2$ are produced of a stock consisting of 100% chemithermomechanical pulp (CTMP).
On these paperboard samples the so called edge penetration for a hydrogen peroxide solution (conc.

35%) can be measured according to the "Edge wick" test. The test is measured according to the following method: paperboard samples are covered on both sides with waterproof tape, and cut to a specific size. The samples are conditioned at 23°C, 50% RH for 10 minutes, after which thickness and weight of the samples are measured. Thereafter, the samples are put into a test solution (bath) for a certain period of time: hydrogen peroxide (conc. 35%, 70°C, 10 minutes). The wick index is then calculated by the formula:

$$E \; = \; \frac{W\,2 \; - \; W\,1}{t \; \times \; l}$$

where:

E= Wick index (kg/m2)
W1= weight before bath (mg)
W2= weight after bath (mg)
t= thickness ($\mu$m)
l= total length of the edges of the samples

A low edge penetration is necessary for liquid packaging board and the board that is produced containing the dispersion 1b gives the lowest edge penetration.
It is obvious that the new sizing composition according to the invention can contain other components if so desired or considered appropriate, wherein such components can be chosen according to known principles. Even though it is not necessary to specify such components in order to make it possible to carry out the invention, it can be mentioned, among the common additives, for example dispersions agents, aluminium compounds such as alum (aluminium sulphate) and polyaluminium chloride.

**Claims**

1. Sizing composition in the form of a water based composition comprising at least one hydrophobic cellulose reactive sizing agent and a anionic, cationic or amphoteric polymer comprising a starch, **characterized** in that said starch is a high amylopectin barley-starch which contains more than 90% amylopectin, preferably at least 95% amylopectin.

2. Sizing composition according to claim 1, **characterized** in that the hydrophobic sizing agent is alkylketene dimer or alkenyl succinic anhydride or a mixture of these.

3. Sizing composition according to any of the preceding claims, **characterized in that** one or several derivates of high amylopectin barley-starch are chemically, physically or enzymatically derivated and used in the sizing composition.

4. Sizing composition according to any of the preceding claims, **characterized in that** the high amylopectin barley-starch is substituted with cationic groups by chemical modification with an ammonium compound, preferably a quaternary ammonium compound, and used in the sizing composition.

5. Sizing composition according to claim 4, **charact erized** in that the cationic amylopectin has a grade of substitution of 0,01-0,3, preferably 0,02 - 0,20.

6. Method for producing sized paper or sized paperboard, wherein a sizing agent is added during the production of said paper or paperboard, suitably to a stock which then is dewatered, **characterized in that** a sizing composition according to any of claims 1-5 are used as said sizing agent.

7. Sized paper or paperboard **characterized in that** it includes a sizing composition according to any of claims 1-5.

**Patentansprüche**

1. Leimungszusammensetzung in Form einer wasserbasierten Zusammensetzung, aufweisend mindestens ein auf hydrophobe Cellulose reagierendes Leimungsmittel und ein Stärke aufweisendes anionisches, kationisches oder amphoteres Polymer, **dadurch gekennzeichnet, dass** die Stärke eine Gerstenstärke mit hohem Amylopektingehalt ist, die mehr als 90% Amylopektin enthält, vorzugsweise mindestens 95% Amylopektin.

2. Leimungszusammensetzung nach Anspruch 1, dadurch **gek ennzeichnet,** dass das hydrophobe Leimungsmittel Alkylketendimer oder Alkenylbernsteinäureanhydrid oder einem Gemisch aus diesen ist.

3. Leimungszusammensetzung nach einem der vorhergehenden Ansprüche, **dadurch gekennzeichnet, dass** eines oder mehrere Derivate der Gerstenstärke mit hohem Amylopektingehalt chemisch, physikalisch oder enzymatisch abgeleitet und in der Leimungszusammensetzung verwendet werden.

4. Leimungszusammensetzung nach einem der vorhergehenden Ansprüche, **dadurch gekennzeichnet, dass** die Gerstenstärke mit hohem Amylopektingehalt durch chemische Modifikation mit einer Ammoniumverbindung, vorzugsweise einer quaternären Ammoniumverbindung, mit kationischen Gruppen substituiert und in der Leimungszusammensetzung verwendet wird.

5. Leimungszusammensetzung nach Anspruch 4, dadurch **gek ennzeichnet,** dass das kationische Amylopektin einen Substitutionsgrad von 0,01-0,3 aufweist, vorzugsweise von 0,02 - 0,20.

6. Verfahren zur Produktion von geleimten Papier oder geleimter Pappe, wobei eine Leimungszusammensetzung während der Produktion dieses Papiers oder dieser Pappe hinzugefügt wird, geeigneterweise zum Papierrohstoff, der dann entwässert wird, dadurch **gekennzeichne** t, dass eine Leimungszusammerisetzung nach einem der Ansprüche 1-5 als Leimungsmittel verwendet werden.

7. Geleimtes Papier oder geleimte Pappe, dadurch **geke nnzeichnet,** dass es oder sie eine Leimungszusammensetzung nach einem der Ansprüche 1-5 umfasst.

**Revendications**

1. Composition d'encollage sous la forme d'une composition à base d'eau comprenant au moins un agent d'encollage réactif à la cellulose hydrophobe et un polymère anionique, cationique ou amphotère comprenant de l'amidon, **caractérisée en ce que** ledit amidon est un amidon d'orge à haute teneur en amylopectine qui contient plus de 90 % d'amylopectine, de préférence au moins 95 % d'amylopectine.

2. Composition d'encollage selon la revendication 1, **ca ractérisée** en ce que l'agent d'encollage hydrophobe est un dimère d'alkylcétène ou un anhydride alcénylsuccinique ou un mélange de ceux-ci.

3. Composition d'encollage selon l'une quelconque des revendications précédentes, **caractérisée en ce qu'**un ou plusieurs dérivés d'amidon d'orge à haute teneur en amylopectine sont dérivés chimiquement, physiquement ou par voie enzymatique et utilisés dans la composition d'encollage.

4. Composition d'encollage selon l'une quelconque des revendications précédentes, **caractérisée en ce que** l'amidon d'orge à haute teneur en amylopectine est substitué par des groupes cationiques par modification chimique avec un composé d'ammonium, de préférence un composé d'ammonium quaternaire, et utilisé dans la composition d'encollage.

5. Composition d'encollage selon la revendication 4, **ca ractérisée** en ce que l'amylopectine cationique a un degré de substitution de 0,01-0,3, de préférence 0,02 - 0,20.

6. Procédé de production de papier collé ou de carton collé, dans lequel un agent d'encollage est ajouté pendant la production dudit papier ou carton, de manière appropriée à une pâte qui est ensuite déshydratée, **car actérisée** en ce qu'une composition d'encollage selon l'une quelconque des revendications 1-5 est utilisée en tant que ledit agent d'encollage.

7. Papier ou carton collé **caractérisé en ce qu'**il comprend une composition d'encollage selon l'une quelconque des revendications 1-5.

**REFERENCES CITED IN THE DESCRIPTION**

**Patent documents cited in the description**

- US 4088600 A
- US 2876217 A
- US 4840705 A
- SE 513602
- SE 96012257 A